# EUROPÄISCHE PATENTSCHRIFT

(11) **EP 2 678 897 B1**
(45) Veröffentlichungstag und Bekanntmachung des Hinweises auf die Patenterteilung: **11.01.2017**
(21) Anmeldenummer: 12707506.7
(22) Anmeldetag: 24.02.2012
(51) Int. Cl.: H01M 10/60

(54) **TEMPERIERUNGSVORRICHTUNG UND VERFAHREN ZUR TEMPERIERUNG EINES ENERGIESPEICHERS**
TEMPERATURE-CONTROL DEVICE AND METHOD FOR THE TEMPERATURE CONTROL OF AN ENERGY STORE
DISPOSITIF DE RÉGULATION DE TEMPÉRATURE ET PROCÉDÉ DE RÉGULATION DE LA TEMPÉRATURE D'UNE UNITÉ DE STOCKAGE D'ÉNERGIE

(30) Priorität: 25.02.2011 DE 102011004721
(43) Veröffentlichungstag der Anmeldung: 01.01.2014
(73) Patentinhaber: MAHLE Behr GmbH & Co. KG, 70469 Stuttgart (DE)
(72) Erfinder: GRÜNWALD, Jürgen, 71638 Ludwigsburg (DE); WEHOWSKI, Manuel, 70563 Stuttgart (DE)
(74) Vertreter: Grauel, Andreas
(86) Internationale Anmeldenummer: PCT/EP2012/053205
(87) Internationale Veröffentlichungsnummer: WO 2012/113930

(56) Entgegenhaltungen:
- EP-A1- 2 133 952
- WO-A1-2010/071463
- DE-A1-102010 011 668
- US-A1- 2008 295 535
- US-A1- 2010 291 414

## Beschreibung

Die vorliegende Erfindung bezieht sich auf eine Temperierungsvorrichtung zur Temperierung eines Energiespeichers gemäß Anspruch 1 sowie auf ein Verfahren zur Temperierung eines Energiespeichers gemäß Anspruch 7.

Beim Einsatz von modernen Hochleistungsbatterien, die aus einer Anzahl einzelner Zellen aufgebaut sind (z.B. Akkumulatoren bzw. Sekundärbatterien), wie z.B. in Elektro- oder Hybridfahrzeugen, ist dafür Sorge zu tragen, dass sich die Temperatur der Batterie während des Betriebs in einem gewissen Intervall befindet, um die Effizienz, Funktionstüchtigkeit und Sicherheit der Einrichtung zu gewährleisten.

Einerseits sinkt der Wirkungsgrad der Batteriezellen bei Unterschreitung einer geeigneten Betriebstemperatur sehr stark und die Zellen produzieren eine hohe Verlustleistung. Andererseits laufen oberhalb eines geeigneten Betriebsbereichs Prozesse innerhalb der Zellen ab, die zu irreversiblen Schädigungen führen.

Aus diesen Gründen ist eine Batterietemperierung (Kühlung bzw. Heizung) erforderlich. Zur Batterietemperierung wird häufig ein Temperierungsmedium (z.B. Kältemittel, Kühlmittel oder Luft) eingesetzt, das über eine Anbindung in thermischem Kontakt mit der Batterie steht. Eine weitere Möglichkeit zur Batterietemperierung stellt die Verwendung von thermoelektrischen Elementen dar.

Da die Verlustwärme der Batterie ebenso wie die Umgebungsbedingungen stark variieren können, ist die Temperierung wechselnden Bedingungen anzupassen. Hierbei sollte die Temperierung möglichst energieeffizient gestaltet werden. In einigen Kombinationen aus Betriebszustand der Batterie und Umgebungsbedingungen genügt eine passive Temperierung. Erreicht beispielsweise die Batterie aufgrund starker Belastung ihr oberes Temperaturlimit, die Umgebung ist aber kalt genug, sollte die Batterie mittels Wärmeleitung und Konvektion vor Überhitzung geschützt werden. Hierbei kann auch ein weiteres Wärmeübertragungsfluid zwischen Umgebung und Batterie (z.B. Kühlmittel, Kältemittel oder Luft) zwischengeschaltet sein. Weiterhin kann es unter bestimmten Umständen erforderlich sein, dass möglichst kein thermischer Kontakt zwischen Batterie und Umgebung - auch nicht über ein zwischengeschaltetes Wärmeübertragungsfluid - gegeben sein soll. Beispielsweise sollte bei tiefen Außentemperaturen die Batterie auf Betriebstemperatur vorkonditioniert werden, da sie aufgrund geringer Leistungsauf- und -entnahme momentan nur wenig Eigenwärme erzeugt.

Des Weiteren kann eine kalte Batterie durch wärmere Umgebungsluft bzw. durch ein wärmeres Übertragungsfluid unterstützend aufgewärmt werden, beispielsweise wenn ein kaltes Fahrzeug in eine wärmere Umgebung fährt. Es wäre also sinnvoll, je nach Bedarf einen hohen oder geringen Wärmedurchgang zwischen Batterie und Umgebung zu "schalten".

Die Schrift US 4,314,008 offenbart eine thermoelektrische Temperierung von Batterien bei der die Akkumulatoren sich in einem Gehäuse befinden, welches durch eine äußere Lage von Peltierelementen gekühlt oder geheizt wird. Die Abwärme im Kühlfall bzw. die aufgenommene Wärme im Heizfall wird über Kühlrippen an der anderen Seite der Peltierelemente an die Umgebungsluft abgegeben bzw. aus dieser gewonnen.

Die US 2010/0062321 A1 offenbart eine schaltbare Isolierung durch einen Antriebsmechanismus, der zwei Modi bereitstellt. Neben einem mechanischen Mechanismus können die zwei Modi auch durch ein expandierendes Medium (z.B. Verdampfung, Bi-Metall) eingestellt werden.

Die DE 10 2008 034 887 A1 offenbart einen bedarfsweise zur Batteriekühlung einsetzbaren Luftkühler. Eine schaltbare Isolierung wird durch Bi-Metallstreifen realisiert.

Die DE 10 2010 011 668 A1 offenbart eine Temperierungsvorrichtung nach dem Oberbegriff von Anspruch 1. Weitere Temperierungsvorrichtungen sind durch die US 2010/0291414 A1, WO 2010/071463 A1, EP 2133952 A1 und US 2008/0295535 A1 bekannt geworden.

Prinzipiell erfordern fluidgekühlte Systeme den Einsatz von Zusatzkomponenten. Hierzu zählen u.a, eine Einheit zur Förderung des Temperierungsmediums (z.B. einen Kompressor, eine Pumpe oder ein Gebläse), Wärmeübertrager, Ventile, Fluidleitungen, usw. Bei der Kältemittel- und Kühlmittelkühlung ist zudem das Temperierungsmedium bereitzustellen.

Bei der Umsetzung von schaltbaren Isolierungen gemäß dem Stand der Technik ergeben sich folgende Nachteile. Einerseits basieren mechanische Schaltungen auf beweglichen Teilen, die die Systemkomplexität erhöhen und von denen eine erhöhte Verschleiß- und Störanfälligkeit ausgeht. Andererseits bedeutet die Realisierung einer schaltbaren Isolierung über ein oder mehrere Fluide eine Erhöhung der Systemkomplexität des Systems, verbunden mit zusätzlichen Kosten sowie erhöhtem Bauteil- und Bauraumbedarf.

Es ist die Aufgabe der vorliegenden Erfindung eine verbesserte Temperierungsvorrichtung sowie ein verbessertes Verfahren zur Temperierung zu schaffen.

Diese Aufgabe wird durch eine Temperierungsvorrichtung sowie ein Verfahren zur Temperierung gemäß den Hauptansprüchen gelöst.

Die vorliegende Erfindung schafft eine Vorrichtung zur Temperierung einer Energiequelle, wobei die Vorrichtung folgende Merkmale aufweist:
- eine Temperierungseinheit, die zumindest ein Peltierelement aufweist, welches thermisch wirksam zwischen einem Aufnahmebereich für die Energiequelle und einem Fluidbereich angeordnet ist;
- eine Steuereinheit zur Spannungsversorgung des Peltierelements, wobei die Steuereinheit ausgebildet ist, um dem Peltierelement eine Spannung zuzuführen, die bewirkt, dass das Peltierelement einen Wärmetransport von dem wärmeren des Aufnahme- oder Fluidbereichs zu dem kälteren des Aufnahme- oder Fluidbereichs ausführt.

Ferner schafft die vorliegende Erfindung ein Verfahren zur Temperierung einer Energiequelle gemäß Anspruch 7 unter Verwendung einer erfindungsgemäßen Temperierungsvorrichtung, die zumindest ein Peltierelement aufweist, welches thermisch wirksam zwischen einem Aufnahmebereich für die Energiequelle und einem Fluidbereich angeordnet ist, wobei die Temperierungsvorrichtung ferner eine Steuereinheit zur Spannungsversorgung des Peltierelements aufweist, wobei die Steuereinheit ausgebildet ist, um dem Peltierelement eine Spannung zuzuführen, die bewirkt, dass das Peltierelement einen Wärmetransport von dem wärmeren des Aufnahme- oder Fluidbereichs zu dem kälteren des Aufnahme- oder Fluidbereichs ausführt, und wobei das Verfahren die folgenden Schritte umfasst:
- Einlesen von Temperaturwerten und/oder Temperaturdifferenzen, die eine Temperatur in dem Aufnahmebereich und in dem Fluidbereich und/oder eine Temperaturdifferenz zwischen Aufnahmebereich und Fluidbereich repräsentieren; und
- Beaufschlagen des Peltierelementes mit einer Spannung, die bewirkt, dass das Peltierelement einen Wärmetransport von dem wärmeren des Aufnahme- oder Fluidbereichs zu dem kälteren des Aufnahme- oder Fluidbereichs ausführt.

Der vorliegenden Erfindung liegt die Erkenntnis zu Grunde, dass eine sehr effiziente Steuerung der thermischen Isolation zwischen einem Aufnahmebereich für die Energiequelle und einem Fluidbereich dadurch erreicht werden kann, dass zwischen den beiden genannten Bereichen ein Peltierelement angeordnet ist, das mittels einer Steuereinheit mit Spannung versorgt wird, so dass Wärme von einem wärmeren Bereich in einen kälteren Bereich durch das Peltierelement transportiert wird. Dieser Wärmetransport entspricht dem bekannten Wärmefluss wenn keine "Wärmepumpe" in Form eines derart mit Spannung beaufschlagten Peltierelements verwendet wird. Entgegen der üblichen Verwendung des Peltierelements als Heizelement, nämlich Wärme von einem kälteren Bereich in einen wärmeren Bereich zu "pumpen" oder als Kühlelement, nämlich Wärme von einem kälteren Bereich in einen heißeren Bereich zu "pumpen", wird bei den hier vorgestellten Ansatz durch aktive Spannungsbeaufschlagung des Peltierelements ein thermischer Widerstand dieses Peltierelementes reduziert, so dass ein natürlicher Wärmefluss von dem wärmeren in den kälteren Bereich unterstützt wird. Auf diese Weise lässt sich die sonst hohe thermische Isolationswirkung eines Peltierelements durch Beaufschlagung des Peltierelements mit einer Spannung einfach steuern. Hierbei wird ausgenutzt, dass das Peltierelement nach Beaufschlagung mit einer Spannung mit einem positiven bzw. negativen Vorzeichen einen Wärmetransport in eine erste beziehungsweise zweite Richtung ermöglicht. Auf diese Weise lässt sich vorteilhaft vermeiden, dass zur steuerbaren Isolation zwischen zwei thermisch zu isolierenden Bereichen immer mechanische Komponenten eingesetzt werden müssen, die die zuvor beschriebenen Nachteile aufweisen.

Günstig ist es ferner, wenn die Steuereinheit ausgebildet ist, um dem Peltierelement eine Spannung zuzuführen, die bewirkt, dass das Peltierelement einen Wärmetransport von dem kälteren des Aufnahme- oder Fluidbereichs zu dem wärmeren des Aufnahme- oder Fluidbereichs ausführt. Eine derartige Ausführungsform der vorliegenden Erfindung bietet den Vorteil, dass nicht nur eine steuerbare Isolationswirkung des Peltierelements durch das Anlegen der Spannung möglich wird, sondern dass das Peltierelement auch aktiv zur Kühlung oder Heizung verwendet werden kann. Dies erweitert den Einsatzbereich der hier vorgeschlagenen Erfindung.

Gemäß einer anderen Ausführungsform der vorliegenden Erfindung kann die Steuereinheit ausgebildet sein, um während des Betriebs der Temperierungsvorrichtung dem Peltierelement keine Spannung oder eine Spannung von 0 Volt zuzuführen. Eine derartige Ausführungsform der vorliegenden Erfindung bietet den Vorteil, dass auch eine Isolationswirkung des Peltierelements gezielt eingesetzt werden kann, beispielsweise wenn im Fluidbereich eine sehr niedrige Temperatur vorliegt, wogegen eine im Aufnahmebereich positionierte Energiequelle eine gewisse Mindesttemperatur benötigt, um Energie zu liefern. Wird nun dem Peltierelement keine Spannung zugeführt, wirkt es als thermischer Isolator und stellt somit sicher, dass möglichst wenig Wärme aus dem Aufnahmebereich abfließen kann.

Erfindungsgemäß ist es, wenn die Temperierungseinheit zumindest einen Fluidkanal zur Führung eines Temperierungsmediums aufweist, wobei der Fluidkanal im Fluidbereich angeordnet ist. Eine derartige Ausführungsform der vorliegenden Erfindung bietet den Vorteil einer sehr effizienten Kühlung bzw. Heizung, da durch den Fluidkanal ein entsprechendes Temperierungsmedium zu- oder abgeführt werden kann, so dass eine gezielte und sehr gute Steuerung der Wärmezu- oder -abfuhr möglich wird.

Gemäß der Erfindung weist die Temperierungseinheit ferner zumindest einen weiteren Fluidkanal auf, der thermisch mit dem Aufnahmebereich gekoppelt ist, wobei zwischen dem weiteren Fluidkanal und dem Aufnahmebereich kein Peltierelement angeordnet ist. Eine derartige Ausführungsform der vorliegenden Erfindung bietet den Vorteil, dass viel Temperierungsfläche zur Verfügung steht und eine kostenintensive, überdimensionierte Vollausstattung der Fluidkanäle mit Peltierelementen entfallen kann.

Ferner kann gemäß einer anderen Ausführungsform der vorliegenden Erfindung die Temperierungseinheit einen Temperierungsmedium-Kreislauf mit zumindest dem Fluidkanal und einem Kühler aufweisen. Eine derartige Ausführungsform der vorliegenden Erfindung bietet den Vorteil, dass durch das Vorsehen des genannten Temperierungsmedium-Kreislaufs eine kompakte Bauform der Temperierungsvorrichtung möglich wird, da durch die Möglichkeit einer effizienten Wärmeabfuhr oder -zufuhr aus dem Fluidkanal zum Kühler auch Bereiche der Temperierungsvorrichtung effizient an einen Wärmetausch angebunden werden können, die von einer Außenoberfläche der Temperierungsvorrichtung entfernt im Inneren der Temperierungsvorrichtung angeordnet sind.

Um eine noch bessere Steuerbarkeit des Wärmetausches zu ermöglichen, kann auch der Fluidkanal und/oder ein weiterer Fluidkanal im Fluidbereich zumindest ein Ventil aufweisen, das ausgebildet ist, um einen Fluss des Temperierungsmediums im Fluidkanal oder im weiteren Fluidkanal zu beeinflussen oder zu unterdrücken. Eine derartige Ausführungsform der vorliegenden Erfindung bietet den Vorteil, dass nun gezielt ein Fluidstrom durch den Fluidkanal oder den weiteren Fluidkanal unterbrochen oder bezüglich seiner Stärke gesteuert werden kann, um hierdurch eine verbesserte Regulierung der dem Aufnahmebereich zu- oder abgeführten Wärme zu erreichen.

Besonders einfach und somit kostengünstig kann ein solches Ventil ausgestaltet sein, wenn das zumindest eine Ventil ein temperaturgesteuertes Bimetallventil ist.

Um einen sehr gut steuerbaren Wärmetransport zu erreichen, kann das zumindest eine Ventil auch durch die Steuereinheit steuerbar sein, wobei die Steuereinheit ausgebildet ist, um abhängig von einer Temperatur im Aufnahmebereich und/oder im Fluidbereich das Ventil zu öffnen oder zu schließen. Eine derartige Ausführungsform der vorliegenden Erfindung bietet den Vorteil, dass die Steuereinheit neben der Beaufschlagung des Peltierelements mit einer Spannung auch mittels einer Steuerung des Schaltzustands des Ventils die Zufuhr oder den Abtransport von Wärme zu dem Peltierelement und somit auch die Zufuhr oder den Abtransport von Wärme zu dem Aufnahmebereich sehr präzise regulieren kann.

Gemäß einer weiteren Ausführungsform der vorliegenden Erfindung kann auch eine Energiequelle in dem Aufnahmebereich angeordnet sein, welche thermisch mit dem Peltierelement gekoppelt ist. Hierdurch wird eine hochwirksame und einfache Temperierung dieser Energiequelle möglich.

Vorteilhafte Ausführungsbeispiele der vorliegenden Erfindung werden nachfolgend Bezug nehmend auf die beiliegenden Zeichnungen näher erläutert. Es zeigen:
- Fig. 1A-F: schematische Darstellungen von Wirkprinzipien eines Peltierelementes bei unterschiedlichen thermischen Gradienten und unterschiedlicher Bestromung;
- Fig. 2A: eine schematische Darstellung eines Wärmetransports von einem wärmeren zu einem kälteren Bereich;
- Fig. 2B: ein Diagramm einer elektrisch aufzuwendenden Leistung in Bezug zu dem durch das Peltierelement hindurch transportierten Wärmestrom;
- Fig. 3: ein Blockschaltbild eines Temperierungsmedium-Kreislaufs mit einem Niedertemperaturkühler und einem Peltierelement zwischen einem Aufnahmebereich für eine Energiequelle wie eine Batterie und eine Kühlplatte mit Fluidkanälen;
- Fig. 4A: eine schematische Darstellung eines ersten Betriebszustands der Temperierungsvorrichtung, die auf einer Querschnittansicht eines Ausführungsbeispiels der vorliegenden Erfindung basiert;
- Fig. 4B: eine schematische Darstellung eines zweiten Betriebszustands der Temperierungsvorrichtung, die auf einer Querschnittansicht eines Ausführungsbeispiels der vorliegenden Erfindung basiert;
- Fig. 4C: eine schematische Darstellung eines dritten Betriebszustands der Temperierungsvorrichtung, die auf einer Querschnittansicht eines Ausführungsbeispiels der vorliegenden Erfindung basiert;
- Fig. 4D: eine schematische Darstellung eines vierten Betriebszustands der Temperierungsvorrichtung, die auf einer Querschnittansicht eines Ausführungsbeispiels der vorliegenden Erfindung basiert;
- Fig. 5: eine schematische Querschnittsansicht durch ein zweites Ausführungsbeispiel der vorliegenden Erfindung; und
- Fig. 6: ein Ablaufdiagramm eines Ausführungsbeispiels der vorliegenden Erfindung als Verfahren.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei auf eine wiederholte Beschreibung dieser Elemente verzichtet wird.

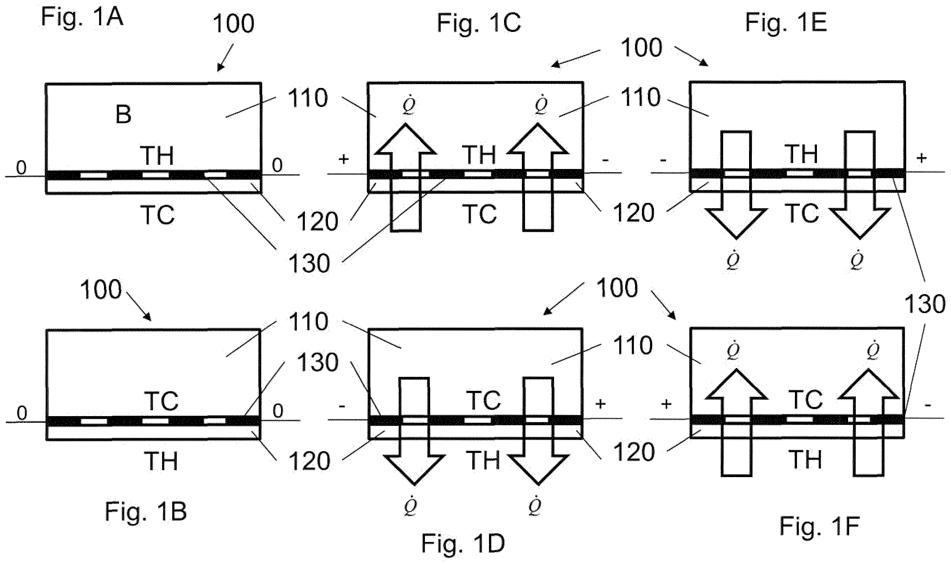

Wie im Stand der Technik beschrieben, werden Peltierelemente thermisch zwischen der Batterie und einem Wärmeübertragungsfluid (Luft, Kühlmittel etc.) angeordnet. Anstelle der ansonsten üblichen Betriebsweise, Wärme von der kalten Seite zur warmen Seite zu pumpen, wird mit der vorliegenden Erfindung ein Ansatz offenbart, aktiv Wärme von der warmen zur kalten Seite zu pumpen, indem die Stromflussrichtung entsprechend anders herum gepolt wird, als im üblichen Kühl- bzw. Wärmepumpenbetrieb üblich. In der Fig. 1 sind unterschiedliche Teilfiguren gezeigt, die sechs unterschiedliche Fälle von Temperaturgradienten darstellen. Gezeigt ist dabei ein Aufnahmeraum oder -bereich 110 und ein Fluidraum oder -bereich 120, die durch zumindest ein Peltierelement 130 getrennt sind, wobei das Peltierelement 130 thermisch sowohl mit dem Aufnahmebereich 110 als auch mit dem Fluidbereich 120 gekoppelt ist. In dem Aufnahmebereich 110 ist eine Batterie als Beispiel für eine Energiequelle angeordnet. In den nachfolgenden Darstellungen wird der wärmere des Aufnahmebereichs oder Fluidbereichs mit TH bezeichnet und der kältere des Aufnahmebereichs oder Fluidbereichs mit TC bezeichnet. In der Darstellung aus Fig. 1A ist ein Szenario wiedergegeben, bei der Aufnahmebereich 110 wärmer als der Fluidbereich 120 ist und bei dem keine Spannung an das Peltierelement angelegt ist, was durch die Darstellung der Null an den beiden Enden links und rechts vom Peltierelement 130 symbolisiert ist. Das Peltierelement 130 wird somit als thermisches Isolationselement verwendet, da ein unbestromtes Peltierelement üblicherweise einen hohen thermischen Widerstand aufweist.

In der Fig. 1 B ist ein zum Szenario aus Fig. 1A analoges Szenario wiedergegeben, wobei nun der Aufnahmebereich 110 kälter als der Fluidbereich 120 ist. Ebenfalls ist in dem Szenario gemäß Fig. 1 B keine Spannung an das Peltierelement 130 angelegt. Auch in diesem Szenario wirkt das Peltierelement 130 wieder als thermischer Isolator.

In der Darstellung Fig. 1C ist der Aufnahmebereich 110 heißer als der Fluidbereich 120, wobei an das Peltierlement eine Spannung derart angelegt ist, dass ein Wärmetransport *Q̇* von der kälteren Seite (d.h. dem Fluidbereich 120) in den wärmeren Bereich (d.h. den Aufnahmebereich 110 für die Energiequelle) erfolgt; dies bedeutet, dass Wärme von der kälteren Seite zur heißeren Seite gepumpt wird, so dass das Peltierelement als Heizung wirkt. In diesem Fall wird durch das Peltierelement eine aktive Temperierung durchgeführt.

In der Darstellung Fig. 1 D ist der Aufnahmebereich 110 kälter als der Fluidbereich 120, und es wird an das Peltierelement 130 eine Spannung derart angelegt, dass über das Peltierelement 130 ein Wärmetransport *Q̇* von dem Aufnahmebereich 110 in den Fluidbereich 120 erfolgt. In diesem Fall wirkt das Peltierelement 130 ebenfalls aktiv temperierend, hier als Kühlung für ein Element wie die Energiequelle im Aufnahmebereich 110.

In den Figuren 1C und 1 Dwird das Peltierelement 130 mit entgegengesetzten Spannungen beaufschlagt, die zum gewünschten Wärmetransport *Q̇* in den Aufnahmebereich 110 hinein oder aus dem Aufnahmebereich 110 hinaus führt. Die entsprechende Polung der Spannung ist exemplarisch an den beiden seitlichen Enden des Peltierelementes 130 aus den Figuren 1C und 1 D dargestellt.

Die in den Figuren 1C und 1 D dargestellten Fälle entsprechen dem Stand der Technik. Die Darstellungen aus den Figuren 1 E und 1 F entsprechen dem Grundgedanken, der der vorliegenden Erfindung zu Grunde liegt. In der Fig. 1 E ist ein Szenario dargestellt, bei dem der Aufnahmebereich 110 wärmer als der Fluidbereich 120 ist. Dabei wird jedoch eine Polung der Spannung, mit der das Peltierelement 130 beaufschlagt wird, derart angelegt, wie es in der Fig. 1 D dargestellt ist. Dabei wird Wärme Q von dem wärmeren Aufnahmebereich 110 über das Peltierelement in Richtung des kälteren Fluidbereichs 120 gefördert, wobei dieser Wärmetransport auch auf natürliche Weise durch die Vermittlung des Temperaturgradienten erfolgen würde. Die an das Peltierelement 130 angelegte Spannung wirkt somit derart, dass sie einen natürlichen Wärmefluss von dem heißeren Aufnahmebereich 110 in den kälteren Fluidbereich 120 unterstützt und somit die Isolationswirkung des Peltierelementes 130 herabsetzt.

In der Fig. 1 F ist ein Szenario dargestellt, bei dem der Fluidbereich 120 wärmer als der Aufnahmebereich 110 ist, wobei an dem Peltierelement 130 eine Spannung entsprechend der Darstellung aus Fig. 1C angelegt ist, d.h. es wird durch das Peltierelement 130 ein Wärmetransport *Q̇* von dem wärmeren Fluidbereich 120 in den kälteren Aufnahmebereich 110 unterstützt. Dabei wird durch die Polung der Spannung an dem Peltierelement 130 ebenfalls die Isolationswirkung des Peltierelementes 130 herabgesetzt, so dass der natürliche Wärmetransport unterstützt wird.

Die Darstellung der elektrischen Polung aus den Figuren 1C bis 1 F zeigt, wie sich die Polung der hier vorgestellten Lösung relativ zur Polung der im Stand der Technik eingesetzten, aktiven Kühl- bzw. Wärmepumpenbetriebsart gestaltet. Mit der elektrischen Polung ist die Richtung des aufgrund des Peltiereffektes erzeugten Netto-Wärmeflusses festgelegt. Die in den Figuren 1 E und 1 F dargestellten Varianten der hier vorgestellten Lösung unterscheiden sich von den anderen vier in Zusammenhang mit den Figuren 1A bis 1D beschriebenen Varianten dadurch, dass dieser durch den Peltiereffekt erzeugte Netto-Wärmefluss dem natürlichen Wärmefluss im Vorzeichen gleicht und beide Wärmeflüsse zusammen einen insgesamt höheren, realen Gesamtwärmefluss bewirken.

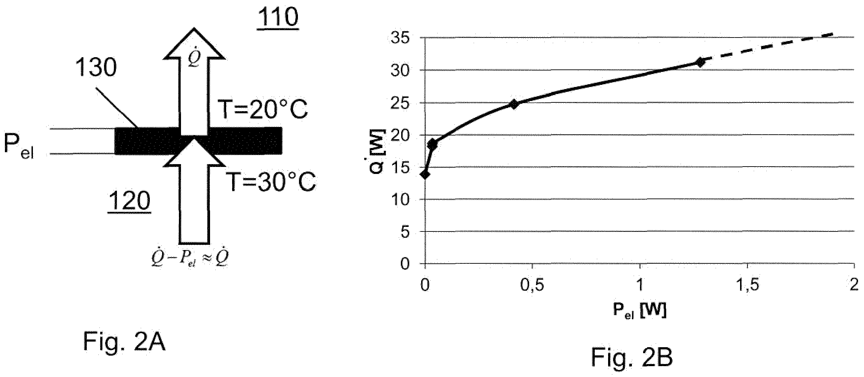

In der Fig. 2A ist eine schematische Darstellung eines Peltierelementes 130 wiedergegeben, das sich beispielhaft zwischen einem Aufnahmebereich 110 mit einer Temperatur von 20 °C und einem Fluidbereich 120 mit einer Temperatur von 30 °C befindet. Bei einer Beaufschlagung des Peltierelementes 130 mit einer geringen Spannung bzw. einer geringen Leistung von beispielsweise 1 W lässt sich eine deutliche Steigerung des Wärmetransports durch das Peltierelement 130 erreichen. Dies ist in der Fig. 2B in einem Diagramm gut zu erkennen, in dem Messwerte eines Wärmetransports für ein kommerziell erhältliches Peltierelement in Bezug auf eine zugeführte elektrische Leistung an dieses Peltierelement dargestellt sind. Ohne Stromfluss (d.h. ohne Aufwendung einer elektrischen Leistung) ergibt sich nur ein geringer, natürlicher Wärmestrom von ca. 13 W aufgrund der relativ schlechten Wärmeleitfähigkeit des thermoelektrischen Materials (d.h. des Peltierelements 130). Dieser Zustand entspricht demnach einem eher thermisch isolierten System. Bei Zugabe einer sehr geringen, in Anbetracht der transportierten Wärme praktisch vernachlässigbaren Leistung von 1 W, steigt die transportierte Wärme auf über den doppelten Wert von ca. 29 W. Dieser Trend setzt sich hin zu noch höheren elektrischen Leistungen fort, so dass mit einer Verdreifachung des Wärmetransportes bei vernachlässigbarem Einsatz elektrischer Leistung gerechnet werden könnte, vorbehaltlich zukünftiger Fortschritte bei den kommerziell verfügbaren Materialien, die diesen Wert weiter verbessern könnten. Dieser Zustand entspricht nun einem System mit gutem thermischen Kontakt zwischen Batterie und der Umgebung bzw. zwischen Batterie und über ein zwischengeschaltetes Wärmeübertragungsfluid zur Umgebung. Somit lässt sich eine schaltbare Isolierung, oder anders ausgedrückt, eine schaltbare Wärmebrücke ohne bewegte Teile realisieren.

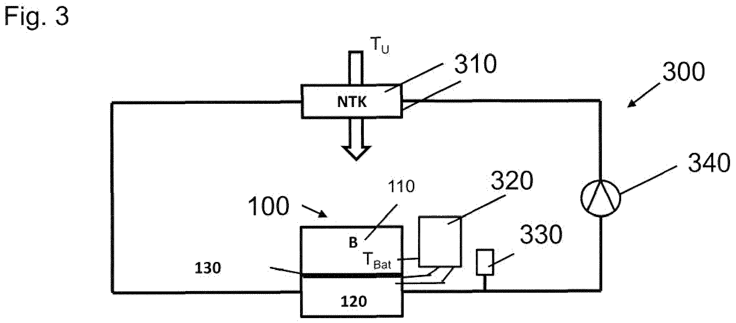

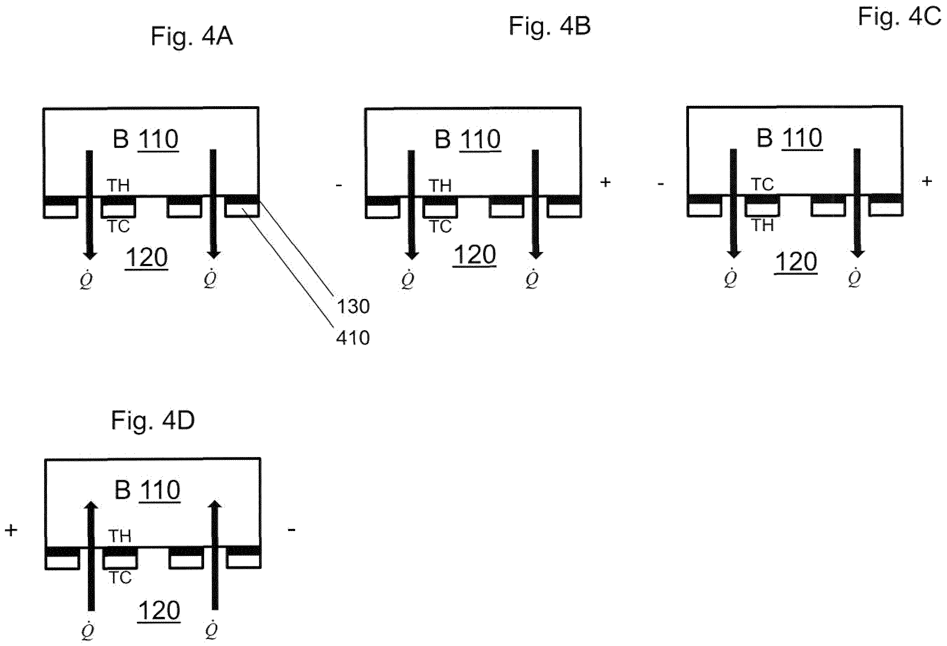

Fig. 3 zeigt ein Blockschaltbild eines Temperierungsmedium-Kreislaufs 300 unter Verwendung einer Temperierungsvorrichtung gemäß einem Ausführungsbeispiel der vorliegenden Erfindung. Der Temperierungsmedium-Kreislauf 300, in dem ein Temperierungsmedium zirkulieren kann, umfasst einen Niedertemperaturkühler 310, der eine Kühlung eines in dem Temperierungsmedium-Kreislauf zirkulierenden Temperierungsmediums wie beispielsweise eines Kühl- oder Kältemittels oder auch Luft unter Verwendung von beispielsweise Umgebungsluft der Temperatur T_{U} ausführt. Weiterhin umfasst der Temperierungsmedium-Kreislauf die Temperierungsvorrichtung 100 gemäß einem Ausführungsbeispiel der vorliegenden Erfindung. Diese Temperierungsvorrichtung 100 umfasst den Aufnahmebereich 110, in dem gemäß dem in Fig. 3 dargestellten Ausführungsbeispiel eine Batterie oder eine andere Energiequelle angeordnet ist, wobei diese Batterie oder die Energiequelle die Temperatur T_{Bat} aufweist. An diesem Aufnahmebereich 110 ist ein Peltierelement 130 thermisch gekoppelt, welches den Aufnahmebereich von dem Fluidbereich 120 trennt, in dem eine Kühlplatte angeordnet ist. In der Kühlplatte sind wie es nachfolgend noch weiter beschrieben wird, eine Mehrzahl von Fluidkanälen in der Form von Kanälen eingebracht, in denen das Temperierungsmedium, beispielsweise das Kühl- oder Kältemittel (oder auch Luft) strömen kann. Weiterhin umfasst der Temperierungsmedium-Kreislauf ein Steuergerät der Temperierungsvorrichtung 320, welches ausgebildet ist, um eine Temperatur in dem Aufnahmebereich 110 und eine weitere Temperatur in dem Fluidbereich 120 zu messen oder zumindest eine solche gemessene Temperatur einzulesen. Ansprechend auf die eingelesenen Temperaturwerte für den Aufnahmebereich 110 und den Fluidbereich 120 wird in der Steuereinheit 320 (d.h. dem Steuergerät) eine Spannung, insbesondere die Polarität der Spannungen ermittelt, mit der das Peltierelement 130 beaufschlagt wird, um den zuvor bereits beschriebenen Wärmetransport unterstützend durchzuführen. Dies wird nachfolgend an Hand der Figuren 4A bis 4D noch detaillierter erläutert.

Ferner umfasst der Temperierungsmedium-Kreislauf 300 ein Temperierungsmediumsreservoir 330 und einen Kompressor oder eine Pumpe 340 zum Fördern des Temperierungsmediums zurück zum Niedertemperaturkühler 310.

Somit ist in der Fig. 3 ein Blockschaltbild eines ersten Ausführungsbeispiels der vorliegenden Erfindung wiedergegeben, bei der eine fluidgekühlte - in diesem Beispiel über einen Niedertemperaturkühler kühlmittelgekühlte - Batteriekühlplatte (die in dem Fluidraum 120 angeordnet ist) mit Peltierelementen bzw. Peltierelementschichten 130 ausgeführt. Hierbei sind die Peltierelemente zwischen der Batterie B (in dem Aufnahmebereich 110) und den fluidführenden Kanälen 410 (in dem Fluidbereich 120) angeordnet, wie dies aus den einzelnen Teilfiguren der Fig. 4 ersichtlich ist. Diese Teilfiguren der Fig. 4 repräsentieren dabei eine Querschnittsansicht durch eine Temperierungsvorrichtung 100 gemäß der Darstellung aus Fig. 3, wobei im Fluidbereich 120 der Teilfiguren aus Fig. 4 jeweils vier, d.h. mehrere Fluidkanäle vorgesehen sind, die je über ein oder mehrere Peltierelemente 130 thermisch mit der Batterie in dem Aufnahmebereich 110 gekoppelt sind. Die Bestromung der Peltierelemente 130 und der Betrieb der Fluidkühlung durch den Betrieb der Pumpe und/oder des Niedertemperaturkühlers hängen von verschiedenen Betriebsbedingungen ab. Insbesondere sind hier die Umgebungstemperatur (die unter Vermittlung des Temperierungsmediums in dem Fluidbereich 120 der Temperierungsvorrichtung herrscht) und die Zelltemperatur der Batterie (d.h. die Temperatur im Aufnahmebereich 110) maßgebend.

Die nachstehenden Fälle a) bis c) beschreiben Zustände, in denen die Batterie ihre zulässige Maximaltemperatur erreicht hat und zur Vermeidung von irreversiblen Schädigungen gekühlt werden sollte.

### Fall a) (in Fig. 4A dargestellt):

Die Batterie B hat ihre zulässige Maximaltemperatur T_{Bat} ≈ T_{Bat,zul} erreicht und die Umgebungsluft ist sehr kalt, d.h. T_{U} ist sehr viel kleiner als T_{Bat}. In diesem Fall ist eine Kühlung der Batterie über das Temperierungsmedium bei einem eingeschalteten Niedertemperaturkühler oder einer eingeschalteten Pumpe 340 ausreichend, um eine ausreichend hohe Wärmeabfuhr *Q̇* zum Schutz der Batterie vor Zerstörung sicherzustellen. Die Peltierelemente 130 brauchen somit nicht bestromt zu werden.

### Fall b) (in der Fig. 4B dargestellt):

Die Batterie B hat ihre zulässige Maximaltemperatur T_{Bat} ≈ T_{Bat,zul} erreicht und die Umgebungsluft T_{U} ist unter Berücksichtigung einer gewissen Temperaturdifferenz ΔT_{Diff} kälter als die Batterietemperatur, so dass gilt: T_{U}+ΔT_{Diff} < T_{Bat}. In diesem Fall ist die Kühlung der Batterie über das Temperierungsmedium, wie im Fall a) beschrieben, nicht ausreichend, so dass eine zusätzliche "passive Kühlung" durch Bestromung der Peltierelemente vorgenommen wird, um eine ausreichend hohe Wärmeabfuhr *Q̇* zum Schutz der Batterie vor Zerstörung sicherzustellen. Der Niedertemperaturkühler 310 oder die Pumpe 340 sind in diesem Betriebszustand eingeschaltet.

### Fall c) (in der Fig. 4C dargestellt):

Die Batterie B hat ihre zulässige Maximaltemperatur T_{Bat} ≈ T_{Bat,zul} erreicht und die Umgebungsluft T_{U} ist unter Berücksichtigung einer gewissen Temperaturdifferenz ΔT_{Diff} wärmer als die Batterietemperatur, so dass gilt: T_{U}+ΔT_{Diff} > T_{Bat}. In diesem Fall ist die alleinige Kühlung der Batterie über das Temperierungsmedium nicht ausreichend, so dass eine zusätzliche "aktive Kühlung" durch Bestromung der Peltierelemente vorgenommen wird, um eine ausreichend hohe Wärmeabfuhr *Q̇* zum Schutz der Batterie vor Zerstörung sicherzustellen. In diesem Fall wird somit nicht ein natürlicher Wärmetransport in Richtung des kälteren Bereiches durch das Peltierelement 130 wie bei der passiven Kühlung realisiert; es wird vielmehr ein Wärmetransport von dem kälteren Bereich zum wärmeren Bereich entgegen dem natürlichen Wärmetransport durch Bestromung des Peltierelementes 130 bewirkt. Der Niedertemperaturkühler 310 oder die Pumpe ist in diesem Betriebszustand ebenfalls eingeschaltet.

### Fall d) (in der Fig. 4D dargestellt):

Der Fall d) beschreibt den Zustand, in dem die Umgebung kalt ist und die Batterie so kalt ist, dass sie geheizt werden sollte. Im einfachsten Fall wird im Heizfall das Temperierungsmedium nicht umgewälzt (d.h. der Niedertemperaturkühler 310 und die Pumpe 340 sind ausgeschaltet) und es findet eine "aktive Heizung" durch Bestromung der Peltierelemente statt. In diesem Fall wird somit durch die Bestromung der Peltierelemente 130 ein Wärmetransport *Q̇* von dem kälteren Bereich zu dem wärmeren der beiden Bereiche eingeleitet. Zur Ausnutzung des Wärmepumpeneffekts kann in der Anlaufphase der Heizung auch das Temperierungsmedium umgewälzt werden, solange die kalte Seite der Peltierelemente kälter als die Temperierungsmediumstemperatur ist. Anschließend wird die Umwälzung des Fluids unterbunden, wobei die "aktive Heizung" durch Bestromung der Peltierelemente weitergeführt wird.

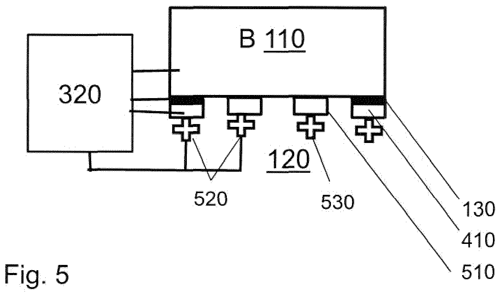

Ein zweites Ausführungsbeispiel basiert auf dem ersten Ausführungsbeispiel. Neben mit Peltierelementen bzw. Peltierelementschichten bestückten Fluidkanälen 410 sind zusätzlich auch Fluidkanäle 510 ohne Peltierelemente existent, wie dies in der Fig. 5 dargestellt ist. Vorteilhaft bei dieser Ausführungsform ist, dass viel Temperierfläche zur Verfügung steht und eine kostenintensive, überdimensionierte Vollausstattung der Fluidkanäle mit Peltierelementen entfällt. Außerdem stellt die Peltierschicht einen weiteren Wärmeübergangswiderstand zum Temperierungsmedium dar, der den natürlichen Wärmestrom reduziert.

Im einfachsten Fall werden bei einer Durchströmung der Fluidkanäle immer sämtliche Kanäle durchströmt. Alternativ kann die Durchströmung der Fluidkanäle mit 410 und ohne 510 Peltierelemente über die Schaltung eines Ventils 520 (beispielsweise pro Fluidkanal 410 oder 510) gesteuert werden. Hierbei sind die Fluidkanäle 410 mit Peltierelementen vorzugsweise dauerhaft durchströmbar, wohingegen die Kanäle 510 ohne Peltierelemente je nach Ventilstellung offen oder geschlossen sind. Als Ventil bietet sich hierzu ein Magnetventil 520 bzw. ein temperaturgesteuertes Bimetallventil 530 an. Im Kühlbetrieb ist, sofern das Temperierungsmedium kälter als die Batterie ist, eine Durchströmung sämtlicher Kanäle vorteilhaft. Wenn das Temperierungsmedium (im Kühlbetrieb) wärmer als die Batterie ist, sollten lediglich die Kanäle mit Peltierelementen durchströmt werden. Im Heizfall sollten die Kanäle ohne Peltierelemente lediglich durchströmt werden, wenn das Temperierungsmedium wärmer als die Batterie ist.

Das vorgestellte Konzept zur Kühlung von Hochleistungsbatterien ermöglicht eine energieeffiziente Temperierung von Hochleistungs-Batterien über thermoelektrische Elemente. Vorteil gegenüber herkömmlichen schaltbaren Isolierungen ist, dass keine beweglichen Teile benötigt werden. Im Fall einer direkten Nutzung der Umgebungsluft ohne ein zwischengeschaltetes Übertragungsmedium kann zudem auf zusätzliche Fluidkreisläufe mit kosten- und bauraumintensiven Zusatzkomponenten verzichtet werden. Somit lässt sich durch die hier vorgestellte Erfindung eine schaltbare Isolierung mit Thermoelektrik realisieren, bei der es das in der Erfindung beschriebene Konzept gestattet, die bedarfsgerechte Temperierung von Hochleistungsbatterien vorzunehmen, wobei eine schaltbare Isolierung bzw. veränderbare Wärmeleitung zwischen Umgebung und Batterie über thermoelektrische Elemente realisiert wird.

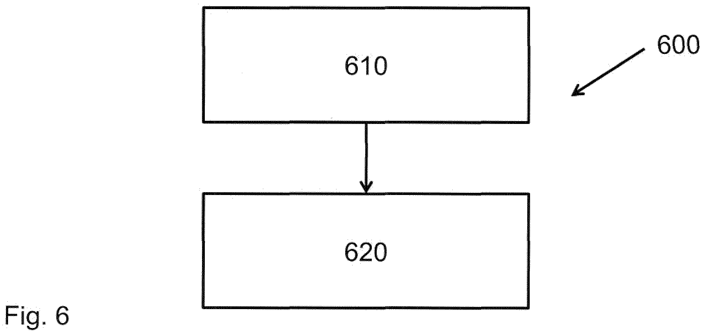

In der Fig. 6 ist ein Ablaufdiagramm eines Ausführungsbeispiels der vorliegenden Erfindung als Verfahren zur Temperierung einer Energiequelle unter Verwendung einer Temperierungsvorrichtung dargestellt, die eine Temperierungseinheit umfasst, die zumindest ein Peltierelement aufweist, welches thermisch wirksam zwischen einem Aufnahmebereich für die Energiequelle und einem Fluidbereich angeordnet ist. Die Temperierungsvorrichtung umfasst ferner eine Steuereinheit zur Spannungsversorgung des Peltierelements, wobei die Steuereinheit ausgebildet ist, um dem Peltierelement eine Spannung zuzuführen, die bewirkt, dass das Peltierelement einen Wärmetransport von dem wärmeren des Aufnahme- oder Fluidbereichs zu dem kälteren des Aufnahme- oder Fluidbereichs ausführt. Das Verfahren 600 umfasst einen Schritt des Einlesens 610 von Temperaturwerten bzw. Temperaturdifferenzen, die eine Temperatur in dem Aufnahmebereich und in dem Fluidbereich und/oder eine Temperaturdifferenz zwischen den beiden Bereichen, repräsentieren. Ferner umfasst das Verfahren einen Schritt des Beaufschlagens 620 des Peltierelementes mit einer Spannung, die bewirkt, dass das Peltierelement einen Wärmetransport von dem wärmeren des Aufnahme- oder Fluidbereichs zu dem kälteren des Aufnahme- oder Fluidbereichs ausführt.

Die beschriebenen Ausführungsbeispiele sind nur beispielhaft gewählt und können (auch komponentenweise) miteinander kombiniert werden.

## Patentansprüche

1. Temperierungsvorrichtung zur Temperierung einer Energiequelle, wobei die Vorrichtung folgende Merkmale aufweist:
- eine Temperierungseinheit (100), die zumindest ein Peltierelement (130) aufweist, welches thermisch wirksam zwischen einem Aufnahmebereich (110) für die Energiequelle und einem Fluidbereich (120) angeordnet ist;
- eine Steuereinheit (320) zur Spannungsversorgung des Peltierelements (130), wobei die Steuereinheit (320) ausgebildet ist, um dem Peltierelement (130) eine Spannung zuzuführen, die bewirkt, dass das Peltierelement (130) einen Wärmetransport von dem wärmeren des Aufnahme- (110) oder Fluidbereichs (120) zu dem kälteren des Aufnahme-(110) oder Fluidbereichs (120) ausführt,
- wobei die Temperierungseinheit zumindest einen Fluidkanal (410) zur Führung eines Temperierungsmediums aufweist, wobei der Fluidkanal (410) im Fluidbereich (120) angeordnet ist und das Peltierelement zwischen dem Aufnahmebereich und dem Fluidkanal angeordnet ist, **dadurch gekennzeichnet, dass**
- die Temperierungseinheit ferner zumindest einen weiteren Fluidkanal (520) im Fluidbereich (120) aufweist, der thermisch mit dem Aufnahmebereich (110) gekoppelt ist, wobei zwischen dem weiteren Fluidkanal (520) und dem Aufnahmebereich (110) kein Peltierelement (130) angeordnet ist, und
- wobei der Fluidkanal (410) und/oder ein weiterer Fluidkanal (510) im Fluidbereich zumindest ein Ventil (520, 530) aufweist, das ausgebildet ist, um einen Fluss des Temperierungsmediums im Fluidkanal (410) oder im weiteren Fluidkanal (510) zu beeinflussen oder zu unterdrücken.

2. Temperierungsvorrichtung gemäß Anspruch 1, **dadurch gekennzeichnet, dass** die Steuereinheit (320) ausgebildet ist, um dem Peltierelement (130) eine Spannung zuzuführen, die bewirkt, dass das Peltierelement (130) einen Wärmetransport von dem kälteren des Aufnahme- (110) oder Fluidbereichs (120) zu dem wärmeren des Aufnahme- (110) oder Fluidbereichs (120) ausführt.

3. Temperierungsvorrichtung gemäß einem der vorangegangenen Ansprüche, **dadurch gekennzeichnet, dass** die Steuereinheit (320) ausgebildet ist, um während des Betriebs der Temperierungsvorrichtung dem Peltierelement (130) keine Spannung oder eine Spannung von 0 Volt zuzuführen.

4. Temperierungsvorrichtung gemäß einem der Ansprüche 1 bis 3, **dadurch gekennzeichnet, dass** die Temperierungseinheit einen Temperierungsmedium-Kreislauf (300) mit zumindest dem Fluidkanal (410) und einem Kühler (310, 340) aufweist.

5. Temperierungsvorrichtung gemäß einem der Ansprüche 1 bis 4, **dadurch gekennzeichnet, dass** das zumindest eine Ventil (530) ein temperaturgesteuertes Bimetallventil ist.

6. Temperierungsvorrichtung gemäß Anspruch 5, **dadurch gekennzeichnet, dass** das zumindest eine Ventil (520) durch die Steuereinheit (320) steuerbar ist, wobei die Steuereinheit (320) ausgebildet ist, um abhängig von einer Temperatur im Aufnahmebereich (110) und/oder im Fluidbereich (120) das Ventil (520) zu öffnen oder zu schließen.

7. Verfahren (600) zur Temperierung einer Energiequelle unter Verwendung einer Temperierungsvorrichtung nach einem der vorhergehenden Ansprüche 1 bis 6, die eine Temperierungseinheit aufweist, die zumindest ein Peltierelement aufweist, welches thermisch wirksam zwischen einem Aufnahmebereich für die Energiequelle und einem Fluidbereich angeordnet ist, wobei die Temperierungsvorrichtung ferner eine Steuereinheit zur Spannungsversorgung des Peltierelements aufweist, wobei die Steuereinheit ausgebildet ist, um dem Peltierelement eine Spannung zuzuführen, die bewirkt, dass das Peltierelement einen Wärmetransport von dem wärmeren des Aufnahme- oder Fluidbereichs zu dem kälteren des Aufnahme- oder Fluidbereichs ausführt, und wobei das Verfahren die folgenden Schritte umfasst:
- Einlesen (610) von Temperaturwerten und/oder Temperaturdifferenzen, die eine Temperatur in dem Aufnahmebereich und in dem Fluidbereich und/oder eine Temperaturdifferenz zwischen Aufnahmebereich und Fluidbereich repräsentieren; und
- Beaufschlagen (620) des Peltierelementes mit einer Spannung, die bewirkt, dass das Peltierelement einen Wärmetransport von dem wärmeren des Aufnahme- oder Fluidbereichs zu dem kälteren des Aufnahme- oder Fluidbereichs ausführt.

## Claims

1. A temperature-control device for the temperature control of an energy source, wherein the device comprises the following features:
- a temperature-control unit (100) which has at least one Peltier element (130) which is arranged in a thermally active fashion between an accommodation region (110) for the energy source and a fluid region (120);
- a control unit (320) for supplying voltage to the Peltier element (130), wherein the control unit (320) is designed to feed to the Peltier element (130) a voltage which causes the Peltier element (130) to transfer heat from the hotter of the accommodation region (110) or the fluid region (120) to the colder of the accommodation region (110) or fluid region (120),
- wherein the temperature-control unit has at least one fluid duct (410) for conducting a temperature-control medium, wherein the fluid duct (410) is arranged in the fluid region (120) and the Peltier element is arranged between the accommodation region and the fluid duct,
**characterized in that**
- the temperature-control unit also has at least one further fluid duct (520) in the fluid region (120) which is thermally coupled to the accommodation region (110), wherein there is no Peltier element (130) arranged between the further fluid duct (520) and the accommodation region (110), and
- wherein the fluid duct (410) and/or a further fluid duct (510) have/has in the fluid region at least one valve (520, 530) which is designed to influence or suppress a flow of the temperature-control medium in the fluid duct (410) or in the further fluid duct (510).

2. The temperature-control device as claimed in claim 1, **characterized in that** the control unit (320) is designed to feed to the Peltier element (130) a voltage which causes the Peltier element (130) to transfer heat from the colder of the accommodation region (110) or fluid region (120) to the hotter of the accommodation region (110) or fluid region (120).

3. The temperature-control device as claimed in one of the preceding claims, **characterized in that** the control unit (320) is designed not to feed any voltage or to feed a voltage of 0 volt to the Peltier element (130) during operation of the temperature-control device.

4. The temperature-control device as claimed in one of claims 1 to 3, **characterized in that** the temperature-control unit has a temperature-control medium circuit (300) with at least the fluid duct (410) and a cooler (310, 340).

5. The temperature-control device as claimed in one of claims 1 to 4, **characterized in that** the at least one valve (530) is a temperature-controlled bimetal valve.

6. The temperature-control device as claimed in claim 5, **characterized in that** the at least one valve (520) can be controlled by the control unit (320), wherein the control unit (320) is designed to open or close the valve (520) as a function of a temperature in the accommodation region (110) and/or in the fluid region (120).

7. A method (600) for controlling the temperature of an energy source using a temperature-control device as claimed in one of the preceding claims 1 to 6 which has a temperature-control unit which has at least one Peltier element which is arranged in a thermally active fashion between an accommodation region for the energy source and a fluid region, wherein the temperature-control device also has a control unit for supplying voltage to the Peltier element, wherein the control unit is designed to feed to the Peltier element a voltage which causes the Peltier element to transfer heat from the hotter of the accommodation region or fluid region to the colder of the accommodation region or fluid region, and wherein the method comprises the following steps:
- reading in (610) temperature values and/or temperature differences which represent a temperature in the accommodation region and in the fluid region and/or a temperature difference between the accommodation region and the fluid region; and
- applying (620) to the Peltier element a voltage which causes the Peltier element to transfer heat from the hotter of the accommodation region or fluid region to the colder of the accommodation region or fluid region.

## Revendications

1. Dispositif d'équilibrage de température servant à tempérer une source d'énergie, où le dispositif présente les caractéristiques suivantes :
- une unité d'équilibrage de température (100) qui présente au moins un élément Peltier (130) qui est disposé en étant thermiquement actif entre une zone de réception (110) prévue pour la source d'énergie, et une zone de fluide (120) ;
- une unité de commande (320) servant à l'alimentation en tension de l'élément Peltier (130), où l'unité de commande (320) est conçue pour fournir une tension à l'élément Peltier (130), tension qui a pour effet que l'élément Peltier (130) procède à un transfert de chaleur depuis la partie plus chaude de la zone de réception (110) ou de la zone de fluide (120), jusqu'à la partie plus froide de la zone de réception (110) ou de la zone de fluide (120),
- où l'unité d'équilibrage de température présente au moins un conduit de fluide (410) servant au guidage d'un milieu d'équilibrage de température, où le conduit de fluide (410) est disposé dans la zone de fluide (120), et l'élément Peltier est disposé entre la zone de réception et le conduit de fluide, **caractérisé en ce que**
- l'unité d'équilibrage de température présente en outre au moins un autre conduit de fluide (520) disposé dans la zone de fluide (120) qui est thermiquement couplée à la zone de réception (110), où aucun élément Peltier (130) n'est disposé entre l'autre conduit de fluide (520) et la zone de réception (110), et
- où le conduit de fluide (410) et / ou un autre conduit de fluide (510) présente, dans la zone de fluide, au moins une soupape (520, 530) qui est conçue pour influencer ou pour supprimer un flux du milieu d'équilibrage de température en circulation dans le conduit de fluide (410) ou dans l'autre conduit de fluide (510).

2. Dispositif d'équilibrage de température selon la revendication 1, **caractérisé en ce que** l'unité de commande (320) est conçue pour fournir une tension à l'élément Peltier (130), tension qui a pour effet que l'élément Peltier (130) procède à un transfert de chaleur depuis la partie plus froide de la zone de réception (110) ou de la zone de fluide (120), jusqu'à la partie plus chaude de la zone de réception (110) ou de la zone de fluide (120).

3. Dispositif d'équilibrage de température selon l'une des revendications précédentes, **caractérisé en ce que** l'unité de commande (320) est conçue pour ne fournir à l'élément Peltier (130) aucune tension ou une tension égale à 0 volt, au cours du fonctionnement du dispositif d'équilibrage de température.

4. Dispositif d'équilibrage de température selon l'une quelconque des revendications 1 à 3, **caractérisé en ce que** l'unité d'équilibrage de température présente un circuit de milieu d'équilibrage de température (300) comportant au moins le conduit de fluide (410) et un refroidisseur (310, 340).

5. Dispositif d'équilibrage de température selon l'une quelconque des revendications 1 à 4, **caractérisé en ce que** la soupape (530) au moins au nombre de un est une soupape bimétallique commandée en fonction de la température.

6. Dispositif d'équilibrage de température selon la revendication 5, **caractérisé en ce que** la soupape (520) au moins au nombre de un peut être pilotée par l'unité de commande (320), où l'unité de commande (320) est conçue pour ouvrir ou pour fermer la soupape (520) en fonction d'une température dans la zone de réception (110) et / ou dans la zone de fluide (120).

7. Procédé (600) servant à tempérer une source d'énergie par l'utilisation d'un dispositif d'équilibrage de température selon l'une quelconque des revendications précédentes 1 à 6, dispositif d'équilibrage de température qui présente une unité d'équilibrage de température qui présente au moins un élément Peltier qui est disposé en étant thermiquement actif entre une zone de réception prévue pour la source d'énergie, et une zone de fluide, où le dispositif d'équilibrage de température présente en outre une unité de commande servant à l'alimentation en tension de l'élément Peltier, où l'unité de commande est conçue pour fournir à l'élément Peltier une tension qui a pour effet que l'élément Peltier procède à un transfert de chaleur depuis la partie plus chaude de la zone de réception ou de la zone de fluide, jusqu'à la partie plus froide de la zone de réception ou de la zone de fluide, et où le procédé comprend les étapes suivantes :
- la mise en mémoire (610) de valeurs de température et / ou de différences de température qui représentent une température dans la zone de réception et dans la zone de fluide et / ou une différence de température entre la zone de réception et la zone de fluide ; et
- l'application (620) à l'élément Peltier d'une tension qui a pour effet que l'élément Peltier procède à un transfert de chaleur depuis la partie plus chaude de la zone de réception ou de la zone de fluide, jusqu'à la partie plus froide de la zone de réception ou de la zone de fluide.
